# EUROPEAN PATENT APPLICATION

(11) **EP 4 692 529 A1**
(43) Date of publication of application: **11.02.2026**
(21) Application number: 25191760.5
(22) Date of filing: 25.07.2025
(51) Int. Cl.: F02D 41/00, F02D 41/02, F02D 41/12, F02D 41/18, F02D 41/14

(54) **SYSTEM AND METHOD FOR CONTROLLING THE INTAKE AIR AMOUNT DURING FUEL CUT IN AN INTERNAL COMBUSTION ENGINE PROVIDED WITH A CATALYST**

(30) Priority: 09.08.2024 JP 2024134485
(71) Applicant: MAZDA MOTOR CORPORATION, Hiroshima 730-8670 (JP)
(72) Inventor: Bando, Naoki, Hiroshima, 730-8670 (JP); Kuroiwa, Yusuke, Hiroshima, 730-8670 (JP); Kawamura, Takahiro, Hiroshima, 730-8670 (JP); Ohshita, Atsushi, Hiroshima, 730-8670 (JP)
(74) Representative: Müller-Boré & Partner Patentanwälte PartG mbB

(57) **Abstract**

When an accelerator opening degree is lower than a predetermined accelerator determination opening degree, a control device implements a fuel cut that stops fuel supply; when the control device implements the fuel cut, the control device implements an intake air amount increase control so that an intake air amount is larger when a catalyst temperature is high than when the catalyst temperature is low; when the control device ends the fuel cut and resumes fuel supply, the control device implements a fuel amount increase so that a fuel amount to be supplied to a combustion chamber is larger than a basic fuel amount; and the control device prohibits the intake air amount increase control for a predetermined period after the control device ends the fuel amount increase control.

## Description

### [Technical Field]

The present invention relates to an engine system, a control method, a control unit and a computer program product.

### [Background Art]

A catalyst device that is provided in an exhaust passage of an engine and purifies exhaust gas deteriorates when exposed to high temperatures. Therefore, in order to maintain good exhaust gas performance of the engine, the catalyst device is required to be prevented from excessively high temperatures.

Patent Literature 1 discloses an engine in which, in order to prevent the catalyst device from excessive temperature rise, the amount of air drawn into the combustion chamber is increased and a large amount of air is introduced into the exhaust passage, therefore into the catalyst device, to cool the catalyst device with the air, in a fuel cut that stops fuel supply to the combustion chamber.

### [Citation List]

### [Patent Literature]

[Patent Literature 1] Japanese Patent Laid-Open No. 2004-132185

### [Summary]

### [Problems to be Solved]

If the catalyst device includes a three-way catalyst, oxygen is absorbed in the three-way catalyst in the fuel cut. This causes a problem in which when the fuel cut ends and the fuel supply is resumed, the air-fuel ratio in the catalyst device is leaner than the stoichiometric air-fuel ratio, making it difficult to reduce NOx. Therefore, if the configuration of Patent Literature 1 is simply applied to a vehicle that has a catalyst device including a three-way catalyst, a large amount of oxygen is absorbed in the catalyst device during fuel cut, which may cause a large decrease in NOx purification performance. In other words, the configuration of Patent Literature 1 has room for improvement in terms of NOx purification performance.

The present invention has been made in consideration of the above circumstances, and an object thereof is to prevent a catalyst device from having an excessively high temperature while improving NOx purification performance.

### [Means for Solving the Problem]

The invention is defined in independent claims. Particularly, an engine system or control device of an engine is provided in a vehicle including an accelerator pedal. The engine system or the control device includes: an engine body including a combustion chamber; an exhaust passage and an intake passage each connected to the engine body; a fuel supply device that supplies fuel to the combustion chamber; an intake air amount adjustment device that adjusts an intake air amount that is an amount of air drawn into the combustion chamber; a catalyst device including a three-way catalyst; a catalyst temperature obtaining device that obtains a catalyst temperature, the catalyst temperature being a temperature of the catalyst device; an accelerator opening degree detection device that detects an accelerator opening degree, the accelerator opening degree being an opening degree of the accelerator pedal; and a control unit that calculates a basic fuel amount based on the accelerator opening degree detected by the accelerator opening degree detection device to control the fuel supply device so that a fuel amount to be supplied to the combustion chamber equals the basic fuel amount. When the accelerator opening degree detected by the accelerator opening degree detection device is lower than a predetermined accelerator determination opening degree, the control unit implements a fuel cut that stops fuel supply by the fuel supply device.

When the control unit implements the fuel cut, the control unit is configured to implement an intake air amount increase control to control the intake air amount adjustment device so that the intake air amount is increased when the catalyst temperature obtained by the catalyst temperature obtaining device is equal to or higher than a determination temperature.

Particularly, the control unit is configured to implement the intake air amount increase control to control the intake air amount adjustment device so that an intake air amount when the catalyst temperature is equal to or higher than the determination temperature is larger than an intake air amount when the catalyst temperature is lower than the determination temperature.

Further particularly, when the control unit implements the fuel cut, the control unit implements an intake air amount increase control that controls the intake air amount adjustment device so that the intake air amount is larger when the catalyst temperature obtained by the catalyst temperature obtaining device is high than when the catalyst temperature is low.

When the control unit ends the fuel cut and resumes fuel supply by the fuel supply device, the control unit implements a fuel amount increase control that controls the fuel supply device so that the fuel amount to be supplied to the combustion chamber is larger than the basic fuel amount, and the control unit prohibits the intake air amount increase control for a predetermined period after the control unit ends the fuel amount increase control.

In the present invention, when the catalyst temperature is high, the intake air amount increase control is implemented during the fuel cut to increase the intake air amount that is the amount of air in the combustion chamber, and therefore the amount of air introduced into the exhaust passage. Therefore, the timing of the fuel cut can be used to cool the catalyst device in the exhaust passage with a large amount of air, preventing the temperature of the catalyst device from becoming excessively high.

Moreover, when the fuel cut is ended and the fuel supply is resumed, the fuel amount increase control is implemented to make the fuel amount to be supplied to the combustion chamber larger than the basic fuel amount. This makes it possible to early consume the oxygen excessively absorbed in the three-way catalyst during the fuel cut by the oxidation of the fuel, and improve the NOx purification performance of the three-way catalyst.

However, if the intake air amount increase control is implemented while the exhaust gas contains a large amount of fuel due to the implementation of the fuel increase control, the fuel resulting from the fuel increase control may disadvantageously react with the air resulting from the intake air amount increase control in the exhaust passage and the catalyst device, causing the temperature of the catalyst device to rise instead. In contrast, in the present invention, the intake air amount increase control is prohibited for a predetermined period after the fuel increase control ends. This makes it possible to prevent the above-described reaction from occurring in the exhaust passage and the catalyst device, thereby preventing the temperature of the catalyst device from rising. Accordingly, according to the present invention, the catalyst device can be reliably prevented from excessive temperature rise while improving the NOx purification performance of the catalyst device.

For example, in the configuration, the control device includes an upstream air-fuel ratio detection device that detects an air-fuel ratio of exhaust gas flowing into the catalyst device, and the control unit prohibits the intake air amount increase control after the fuel amount increase control ends until an air-fuel ratio of the exhaust gas detected by the upstream air-fuel ratio detection device becomes equal to or higher than a stoichiometric air-fuel ratio.

With this configuration, the timing at which the inflow of exhaust gas, containing fuel increased due to the implementation of the fuel increase control, into the catalyst device ends is estimated based on the air-fuel ratio of the exhaust gas detected by the upstream air-fuel ratio detection device, and intake air amount increase control is prohibited until this timing. This makes it possible to prevent the prohibition period of the intake air amount increase control from being excessively long. This then makes it possible to secure the period in which the intake air amount increase control is implemented, and cool the catalyst device more reliably.

For example, in the configuration, the control unit prohibits the intake air amount increase control after the fuel amount increase control ends until a volume of exhaust gas, led out to the exhaust passage after the fuel amount increase control ends, becomes equal to or larger than a volume of the exhaust passage between the engine body and the catalyst device (claim 3).

With this configuration, the timing at which the inflow of exhaust gas, containing fuel increased due to the implementation of fuel amount increase control, into the catalyst device has ended is estimated based on the exhaust gas volume, and intake air amount increase control is prohibited until this timing. This makes it possible to prevent the prohibition period of the intake air amount increase control from being excessively long. This then makes it possible to secure the period in which the intake air amount increase control is implemented, and cool the catalyst device more reliably.

For example, in the configuration, the control device includes a downstream air-fuel ratio detection device that detects an air-fuel ratio of exhaust gas flowing out of the catalyst device, and the control unit implements the fuel amount increasing control for a period after fuel supply by the fuel supply device is resumed until an air-fuel ratio of the exhaust gas detected by the downstream air-fuel ratio detection device becomes equal to or lower than a stoichiometric air-fuel ratio.

With this configuration, the timing at which the state, in which the air-fuel ratio in the catalyst device is leaner than the stoichiometric air-fuel ratio, is terminated is estimated based on the air-fuel ratio of the exhaust gas detected by the downstream air-fuel ratio detection device, and the fuel amount increase control is implemented until this timing. This makes it possible to prevent an excessively long implementation period of the fuel amount increase control and an accompanying long prohibition period of the intake air amount increase control. This then makes it possible to secure the period in which the intake air amount increase control is implemented, and cool the catalyst device more reliably.

In the configuration, the control unit may restrict the intake air amount to a predetermined upper limit intake air amount or less by the intake air amount adjustment device when the fuel cut is not implemented and the catalyst temperature is high or higher than the determination temperature.

With this configuration, when the fuel cut is not implemented and the catalyst temperature is high, the intake air amount is prevented from exceeding the upper limit intake air amount, and the combustion energy generated in the combustion chamber is kept small. This prevents the catalyst temperature from becoming excessively high. However, if opportunities to restrict the intake air amount increases, opportunities to restrict engine output increases, which may deteriorate driving performance of the vehicle. In contrast, in the present invention, since the catalyst device is cooled when the fuel cut is implemented as described above, the opportunities can be reduced in which the catalyst temperature becomes excessively high when the fuel cut is not implemented. This makes it possible to prevent the catalyst temperature from becoming excessively high while preventing decrease in driving performance.

In the above configuration, a throttle valve that is provided in the intake passage, and opens and closes the intake passage may be used as the intake air amount adjustment device.

### [Advantageous Effect of Invention]

As described above, the present invention can prevent the catalyst from having an excessively high temperature while improving the NOx purification performance.

### [Brief Description of Drawings]

FIG. 1 is a schematic configuration diagram of an engine system according to an embodiment of the present invention.
FIG. 2 is a graph showing a relationship between air-fuel ratios and an RO2 output voltages.
FIG. 3 is a diagram showing control blocks of an engine system.
FIG. 4 is a flowchart showing a procedure for setting a catalyst protection flag.
FIG. 5 is a flowchart showing contents of a control implemented by a PCM.
FIG. 6 is a flowchart showing contents of non-FC-time throttle control.
FIG. 7 is a flowchart showing contents of a non-FC-time fuel injection control.
FIG. 8 is a time chart showing time change of each parameter during driving of an engine.

### [Mode for Carrying Out the Invention]

### (Overall configuration of engine system)

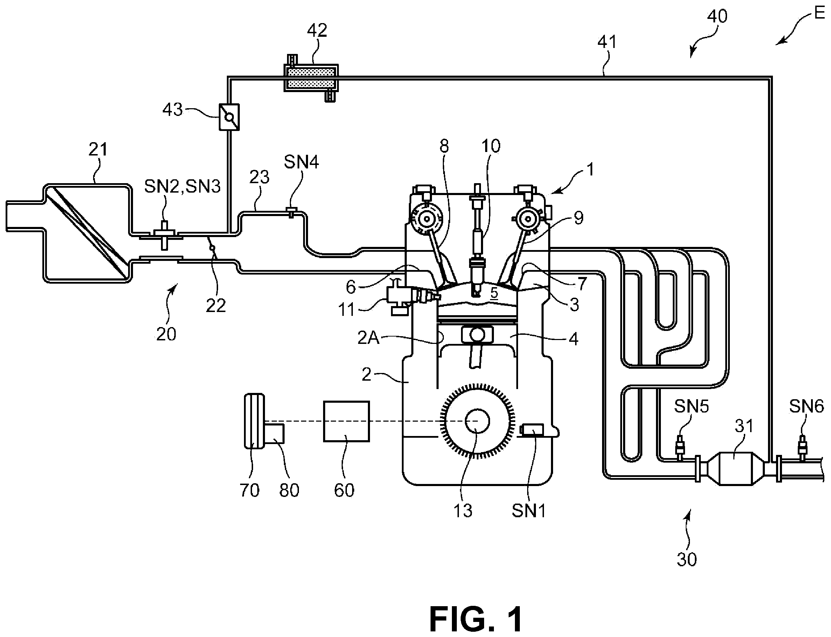

FIG. 1 is a schematic configuration diagram showing an embodiment of an engine system E according to the present invention. A control device of an engine according to the present invention may also be applied to the engine system E.

The engine system E includes an engine body 1 that is driven by receiving a supply of fuel, and an intake passage 20 and an exhaust passage 30 that are connected to the engine body 1. The intake passage 20 is a passage through which intake air, which is the air introduced into the engine body 1, flows. The exhaust passage 30 is a passage through which exhaust gas exhausted from the engine body 1 flows. The engine system E is mounted on a vehicle such as an automobile as a power source for driving the vehicle.

The engine body 1 may be a multi-cylinder engine having a plurality of cylinders 2A (only one of which is shown in FIG. 1). For example, in this embodiment, the engine body 1 is a four-cylinder in-line engine, and has four cylinders 2A aligned in a direction perpendicular to the paper surface of FIG. 1. The engine body 1 may be a single cylinder engine.

The engine body 1 may include a cylinder block 2 having one or a plurality of cylinders 2A formed therein, a cylinder head 3 attached to the upper surface of the cylinder block 2 so as to close the upper end openings of the individual cylinders 2A, and one or a plurality of pistons 4 each housed in a cylinder 2A so as to be able to reciprocate and slide.

A combustion chamber 5 may be defined above the piston 4 of each cylinder 2A. Fuel is supplied to the combustion chamber 5 as described below. The supplied air-fuel mixture is burned in the combustion chamber 5, and the piston 4 reciprocates in the up-down direction due to the expansion force caused by the combustion.

For example, a crankshaft 13, which is the output shaft of the engine body 1, is provided at the lower part of the cylinder block 2 (below the piston 4). The crankshaft 13 is connected to the pistons 4 of the individual cylinders 2A via connecting rods. The crankshaft 13 rotates around its central axis in accordance with the reciprocating motion (up and down movement) of the pistons 4.

The vehicle including the engine system E may include e.g., a multi-speed transmission as a transmission 60. The transmission 60 may also be an automatic transmission, and the transmission 60 and the crankshaft 13 may be connected via a torque converter or the like.

For example, the output of the engine body 1 is transmitted to the one or more wheels 70 via the crankshaft 13, torque converter, transmission 60, and the like. In this embodiment, the transmission 60 is a six-speed multi-stage transmission, and forms forward gear stages that is six gear stages with different transmission gear ratios from each other.

A crank angle sensor SN1 may be attached to the cylinder block 2. The crank angle sensor SN1 detects the crank angle, which is the rotation angle of the crankshaft 13, and the engine rotation speed, which is the rotation speed of the crankshaft 13.

In the cylinder head 3, each cylinder 2A may include an intake port 6 and an exhaust port 7 that communicate with a combustion chamber 5. In the cylinder head 3, each cylinder 2A may include an intake valve 8 for opening and/or closing the opening of the intake port 6 on the combustion chamber 5 side, and an exhaust valve 9 for opening and/or closing the opening of the exhaust port 7 on the combustion chamber 5 side.

In the cylinder head 3, each cylinder 2A may be provided with one or more injectors 11, which supply fuel to the combustion chamber 5. For example, the engine body 1 is a gasoline engine, and each injector 11 injects fuel containing gasoline into the combustion chamber 5.

The injector 11 may inject fuel into the combustion chamber 5. The injector 11 may be a side-injection type fuel injection valve, and its head end faces the combustion chamber 5 from the inner peripheral surface of the combustion chamber 5.

In the cylinder head 3, each cylinder 2A may include one or more spark plugs 10, which ignites the air-fuel mixture in the combustion chamber 5. The spark plug 10 is disposed so that its head end, including a spark plug, faces the inside of the combustion chamber 5 from near the center of the ceiling surface of the combustion chamber 5. The injector 11 corresponds to a "fuel supply device" of the present invention.

The intake passage 20 is connected to the cylinder head 3 so as to communicate with the intake ports 6 of the individual cylinders 2A. In the intake passage 20, an air cleaner 21, a throttle valve 22, and a surge tank 23 may be disposed in this order from the upstream side in the flow direction of the intake air.

The air cleaner 21 is a filter that removes foreign matter in the intake air. The throttle valve 22 is a valve that opens and/or closes the intake passage 20.

The amount of intake air flowing through the intake passage 20, and therefore the amount of air drawn into the combustion chamber 5, changes in accordance with the opening degree of the throttle valve 22. The surge tank 23 is a tank that provides a space for evenly distributing intake air to each cylinder 2A. The throttle valve 22 corresponds to an "intake air amount adjustment device" of the present invention.

An air flow sensor SN2, intake air temperature sensor SN3, and/or intake air pressure sensor SN4 may be disposed in the intake passage 20. The air flow sensor SN2 detects the intake air amount, which is the amount of air drawn into the individual combustion chambers 5 through the intake passage 20.

The intake air temperature sensor SN3 detects the intake air temperature, which is the temperature of the air flowing through the intake passage 20. The intake air pressure sensor SN4 detects the intake air pressure, which is the pressure inside the intake passage 20.

The air flow sensor SN2 and the intake air temperature sensor SN3 may be disposed at a neighborhood of or near the air cleaner 21, and/or respectively detect the flow rate and temperature of air passing through the intake passage 20 at the neighborhood of the air cleaner 21. The intake air pressure sensor SN4 may be disposed in the surge tank 23 and/or detect the pressure inside the surge tank 23.

The exhaust passage 30 is connected to the cylinder head 3 so as to communicate with the exhaust ports 7 of the individual cylinders 2A. A catalyst device 31 is disposed in the exhaust passage 30. The catalyst device 31 is a device that includes a catalyst and purifies exhaust gas by using the action of the catalyst.

Catalyst device 31 may have a built-in three-way catalyst. Thus, when the air-fuel ratio of the exhaust gas is at or close to the stoichiometric air-fuel ratio, the catalyst device 31 oxidizes HC (hydrocarbon) and CO (carbon monoxide) while reducing NOx (nitrogen oxides).

Here, the three-way catalyst has a property of absorbing oxygen. Therefore, when a large amount of oxygen is contained in the exhaust gas, the catalyst device 31 absorbs oxygen. In a state in which the amount of absorbed oxygen is large, the catalyst device 31 cannot sufficiently reduce NOx.

A front O2 sensor SN5 and/or a rear O2 sensor SN6 may be disposed in the exhaust passage 30. The front O2 sensor SN5 detects the concentration of oxygen contained in the exhaust gas and the air-fuel ratio. The rear O2 sensor SN6 detects the air-fuel ratio of the exhaust gas.

The front O2 sensor SN5 is attached to a part of the exhaust passage 30 upstream of the catalyst device 31 (in the direction of exhaust gas flow), and detects the oxygen concentration and air-fuel ratio of the exhaust gas flowing into the catalyst device. In this embodiment, the front O2 sensor SN5 is provided near the upstream end of the catalyst device 31.

The rear O2 sensor SN6 is attached to a part of the exhaust passage 30 downstream of the catalyst device 31 (in the direction of exhaust gas flow), and detects the air-fuel ratio of the exhaust gas flowing out from the catalyst device 31. Here, no member capable of changing the air-fuel ratio, such as a catalyst, may be provided between the rear O2 sensor SN6 and the catalyst device 31, and the rear air-fuel ratio detected by the rear O2 sensor SN6 is approximately equal to the air-fuel ratio in the catalyst device 31.

The front O2 sensor SN5 corresponds to an "upstream air-fuel ratio detection device". The rear O2 sensor SN6 corresponds to a "downstream air-fuel ratio detection device".

In the following, the air-fuel ratio of the exhaust gas passing through the location where the front O2 sensor SN5 is installed, and the air-fuel ratio of the exhaust gas on the upstream side of the catalyst device 31 may be referred to as a front air-fuel ratio, as appropriate. The air-fuel ratio of the exhaust gas passing through the location where the rear O2 sensor SN6 is installed, and the air-fuel ratio of the exhaust gas on the downstream side of the catalyst device 31 may be called a rear air-fuel ratio.

In the following, large/small air-fuel ratios are referred to as lean/rich as appropriate. For example, when the oxygen ratio of the exhaust gas is high and the air-fuel ratio of the exhaust gas is high, the exhaust gas is referred to as being lean, and the opposite is referred to as being rich.

The front O2 sensor SN5 may be a so-called linear O2 sensor, and/or may output a voltage proportional to the oxygen concentration and air-fuel ratio of the exhaust gas. On the other hand, the rear O2 sensor SN6 may be a so-called λ sensor, and may detect whether the exhaust gas is at a neighborhood of the stoichiometric air-fuel ratio, leaner than the stoichiometric air-fuel ratio, or richer than the stoichiometric air-fuel ratio.

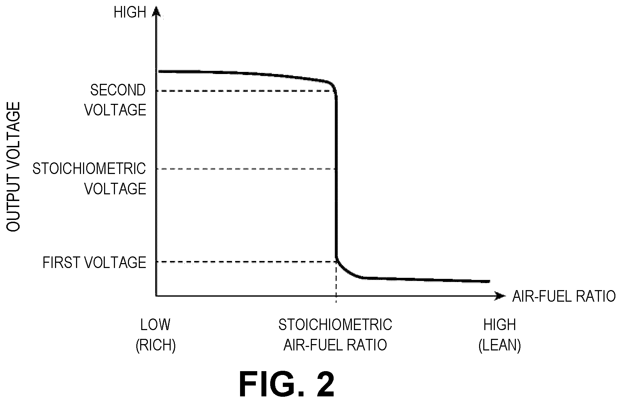

For example, the output voltage of the rear O2 sensor SN6 is as shown in FIG. 2. In the following, the output voltage of the rear O2 sensor SN6 may be referred to as the RO2 output voltage as appropriate. When the air-fuel ratio of the exhaust gas is leaner than the stoichiometric air-fuel ratio, the RO2 output voltage is lower than a predetermined first voltage. When the air-fuel ratio of the exhaust gas is richer than the stoichiometric air-fuel ratio, the RO2 output voltage is higher than a predetermined second voltage. When the air-fuel ratio of the exhaust gas is the stoichiometric air-fuel ratio, the RO2 output voltage is a stoichiometric voltage that is higher than the first voltage and lower than the second voltage.

Particularly, when the exhaust gas air-fuel ratio transitions from a state leaner than the stoichiometric air-fuel ratio to the stoichiometric air-fuel ratio, the RO2 output voltage increases from a voltage lower than the first voltage, through the first voltage, to the stoichiometric voltage. When the exhaust gas air-fuel ratio transitions from a state richer than the stoichiometric air-fuel ratio to the stoichiometric air-fuel ratio, the RO2 output voltage decreases from a voltage higher than the second voltage, through the second voltage, to the stoichiometric voltage.

Note that, in this embodiment, the exhaust passage 30 may be a so-called 4-2-1 type exhaust passage. In other words, the exhaust passage 30 is configured such that four exhaust passages extending from the engine body 1 are merged into two, which are then merged into one on the downstream side (in the direction of exhaust gas flow). The catalyst device 31, the front O2 sensor SN5, and the rear O2 sensor SN6 may be all provided downstream of the part where the exhaust passages merge into one.

The engine system E may be provided with an EGR device 40. EGR device 40 includes EGR passage 41. The EGR passage 41 is a passage that connects the exhaust passage 30 and the intake passage 20, and recirculates EGR gas, which is a part of the exhaust gas, to the intake passage 20. For example, the EGR passage 41 connects a part of the exhaust passage 30 downstream of the catalyst device 31 (in the direction of exhaust gas flow) to a part of the intake passage 20 between the throttle valve 22 and the surge tank 23.

The EGR passage 41 may be provided with an EGR cooler 42 and an EGR valve 43. The EGR cooler 42 cools the EGR gas flowing through the EGR passage 41 through heat exchange. The EGR valve 43 is a valve that opens and closes the EGR passage 41.

The amount of EGR gas recirculated to the intake passage 20 is changed in accordance with the opening degree of the EGR valve 43. The EGR valve 43 may be provided in the EGR passage 41, closer to the intake passage 20 than the EGR cooler 42.

### (Control system)

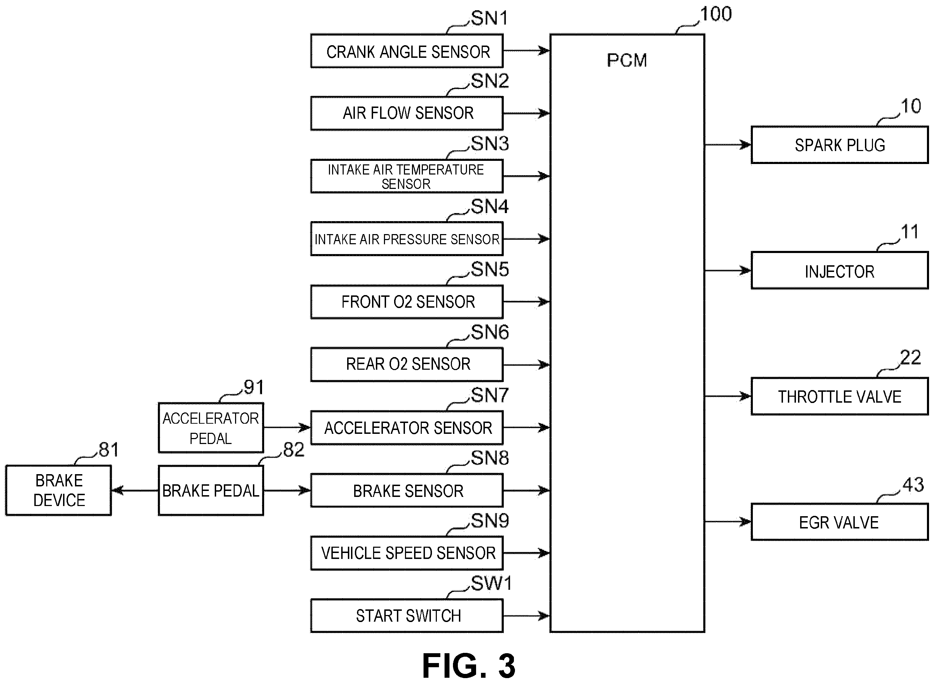

FIG. 3 is a functional block diagram showing the control system of the engine system E. A powertrain control module or a PCM 100 shown in this figure is a device that is mounted on a vehicle and provides overall control of the engine system E. The PCM 100 includes a microcomputer including a processor (CPU) that implements various calculation processes, memories such as ROM and RAM, and various input/output buses. The PCM 100 corresponds to a "control unit" in the present invention.

The PCM 100 may be electrically connected to the crank angle sensor SN1, air flow sensor SN2, intake air temperature sensor SN3, intake air pressure sensor SN4, front O2 sensor SN5, and rear O2 sensor SN6. Information detected by sensors SN1 to SN6 may be input one by one to the PCM 100.

The vehicle including the engine system E includes an accelerator pedal 91 that is depressed by the driver, and an accelerator sensor SN7. The accelerator pedal 91 is an operating device for changing and adjusting the output of the engine body 1 and therefore the vehicle speed. The accelerator sensor SN7 detects the accelerator opening degree, which is the amount of depression of the accelerator pedal 91, that is, the opening degree of the accelerator pedal 91.

For example, the accelerator opening degree may be a parameter that is 0 (%) when the accelerator pedal 91 is not depressed, and is 100 (%) when the depression amount of the accelerator pedal 91 is at its maximum. The accelerator sensor SN7 corresponds to an "accelerator opening degree detection device" of the present invention.

The vehicle includes a brake device 81, a brake pedal 82, and a brake sensor SN8. The brake device 81 is a device that applies a braking force to the one or more wheels 70 to brake the wheels 70.

The brake pedal 82 is an operating means for switching between driving and stopping the brake device 81 and for increasing and decreasing the braking force that the brake device 81 applies to the wheels 70. The brake pedal 82 is depressed by the driver.

The brake sensor SN8 detects: the brake opening degree that is the depression amount of the brake pedal 82, that is, the opening degree of the brake pedal 82.

The vehicle may include a vehicle speed sensor SN9 for detecting the vehicle speed. The vehicle may be provided with a start switch SW1 that is operated by the driver to start the engine body 1.

For example, when a specified operation is performed on the start switch SW1, the IG is turned on and power is supplied to each part of the engine system E, making it possible to start the engine body 1. Particularly, when a predetermined operation is performed on the start switch SW1 while the IG is turned on, the IG is turned off, the power supply to each part of the engine system E is stopped, and the engine body 1 cannot be started.

Information detected by the accelerator sensor SN7 and brake sensor SN8, and a signal from the start switch SW1 may be input one by one to the PCM 100.

For example, the PCM 100 controls each part of the engine system E while executing various determinations and calculations based on input information from at least one of the sensors SN1 to SN9 and the start switch SW1. The PCM 100 is electrically connected to the spark plug 10, the injector 11, the throttle valve 22, the EGR valve 43, and the like, and outputs control signals to each of these devices based on the results of the above calculations, and the like.

### (Fuel cut and basic control in fuel cut)

When fuel cut conditions are met, that is, e.g., the engine rotation speed is higher than a predetermined idle rotation speed and the accelerator opening degree is equal to or smaller than a predetermined accelerator determination opening degree, the PCM 100 implements a fuel cut that stops the drive of the injector 11 of each cylinder 2A and stops fuel injection into each combustion chamber 5. The accelerator determination opening degree may be set to 0 (zero), that is, an opening degree close to full closure, and fuel cut is implemented when the accelerator is substantially off in which the accelerator pedal 91 is not depressed.

While fuel cut, except for a time of the intake air amount increase control described below, is implemented, the PCM 100 may control the throttle opening degree to a predetermined normal FC opening degree. The normal FC opening degree is preset to an opening degree that may be close to 0 (zero) or 0, that is, to full closure, and/or an opening degree that is smaller (on the closure side) than the throttle opening degree to be achieved when the fuel cut is not implemented. While fuel cut, except for a time of EGR valve failure diagnosis described below, is implemented, the PCM 100 may fully close the EGR valve 43.

### (Catalyst protection control)

The following describes the catalyst protection control implemented by the PCM 100 to prevent excessive temperature rise of the catalyst device 31.

### (Catalyst temperature condition)

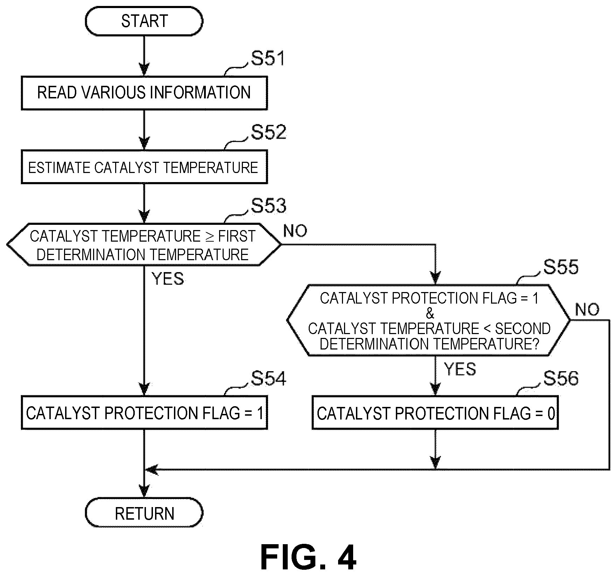

FIG. 4 is a flowchart showing the procedure for calculating the catalyst protection flag. The catalyst protection control is implemented when the catalyst temperature, which is the temperature of the catalyst device 31, is high.

Specifically, catalyst protection control is implemented when the catalyst temperature is equal to or higher than the first determination temperature, and optionally when the catalyst temperature has reached or exceeded the first determination temperature but has not yet dropped below the second determination temperature. The catalyst protection flag may be a flag that indicates whether the condition for implementing this catalyst protection control is met.

Steps S51 to S56 shown in FIG. 4 may be repeatedly implemented at predetermined intervals while IG is turned on. First, the PCM 100 may read various information including the detection values of the sensors SN1 to SN9 (step S51).

In step S51, the PCM 100 may read at least the intake air amount detected by the air flow sensor SN2, the engine rotation speed detected by the crank angle sensor SN1, and the intake air temperature detected by the intake air temperature sensor SN3. Next, the PCM 100 estimates the catalyst temperature, which is the temperature of the catalyst device 31 (step S52).

For example, the PCM 100 estimates the temperature of the exhaust gas based on the intake air amount, engine rotation speed, intake air temperature, the amount of fuel injected from the injector 11, and the like, and estimates the catalyst temperature based on the estimated exhaust gas temperature.

In this embodiment, the PCM 100 obtains the catalyst temperature in this way, and the PCM 100 may correspond to a "catalyst temperature obtaining device" in addition to a "control unit" of the present invention. Alternatively or additionally, a sensor may be used to determine or obtain the catalyst temperature and a corresponding determination result may be provided to the PCM 100.

Next, the PCM 100 determines whether the catalyst temperature estimated in step S52 is equal to or higher than the first determination temperature (step S53). The first determination temperature is preset and stored in the PCM 100. The first determination temperature is set to, for example, 900°C or about 900°C. If the determination in step S53 is YES and the catalyst temperature is equal to or higher than the first determination temperature, the PCM 100 sets the catalyst protection flag to 1 (step S54).

The first determination temperature may be within a range from 900°C to 950°C or a range from about 900°C to about 950°C. When the temperature of the catalyst device 31 is gradually increased, microcracks may start to form at a certain temperature. If the temperature of the catalyst device 31 continuously exceeds such a temperature, there is a risk that the catalyst degrades and reduces its effectiveness. In the worst case, the catalyst device 31 may melt. The temperature at which microcracks occur depends on the physical properties of the catalyst device 31. Such a temperature may be 950°C or about 950°C. Considering the tolerance, sensing variability, and disturbances, 900°C may be a reasonable value as the first determination temperature.

If the determination in step S53 is NO and the catalyst temperature is less than the first determination temperature, the PCM 100 may determine whether the condition is met that the catalyst protection flag is 1 and the catalyst temperature is less than the second determination temperature (step S55). If the determination in step S55 is NO and the catalyst protection flag is 0, or the catalyst temperature is equal to or higher than the second determination temperature, the PCM 100 may end the process (returns to step S51). In other words, the PCM 100 maintains the value of the catalyst protection flag at the current value.

Contrarily, if the determination in step S55 is YES, the catalyst protection flag is 1, and the catalyst temperature is less than the second determination temperature, that is, if the catalyst temperature has reached or exceeded the first determination temperature to set the catalyst protection flag to 1, and then the catalyst temperature has dropped to less than the second determination temperature, the PCM 100 may set the catalyst protection flag to 0 (step S56) and end the process (returns to step S51).

In this way, if the catalyst temperature is equal to or higher than the first determination temperature or the catalyst temperature has reached or exceeded the first determination temperature and has not yet dropped below the second determination temperature, and the condition for implementing the catalyst protection control is met, the catalyst protection flag is set to 1. In addition, at other times when the condition for implementing the catalyst protection control is not met, the catalyst protection flag is set to 0. The catalyst protection flag is set to 0 when IG is turned off.

### (Fuel cut control)

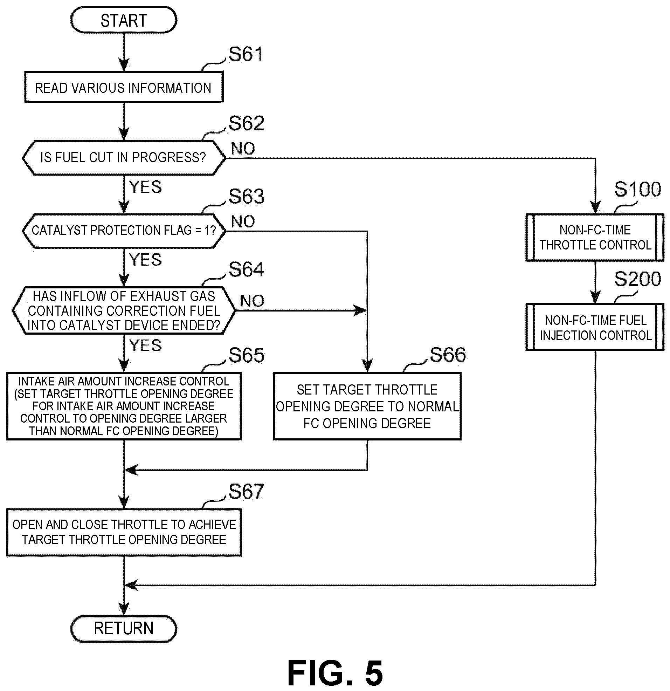

FIG. 5 is a flowchart showing the control implemented by the PCM 100 mainly in the fuel cut. Steps S61 to S200 shown in FIG. 5 may be repeatedly implemented at predetermined intervals while IG is turned on.

First, the PCM 100 may read various information including the detection values of sensors SN1 to SN9 (step S61). In step S61, PCM 100 may read at least the engine rotation speed detected by the crank angle sensor SN1 and the accelerator opening degree detected by the accelerator sensor SN7.

Next, the PCM 100 may determine whether the fuel cut is in progress (step S62). For example, the PCM 100 may determine whether the above-described fuel cut condition is met and fuel injection from the injectors 11 of all the cylinders 2A has been stopped.

If the determination in step S62 is NO and the fuel cut is not in progress, the PCM 100 may implement non-FC-time throttle control (step S100). The PCM 100 may also implement non-FC-time fuel injection control (step S200) and then may end the process (returns to step S61).

The non-FC-time throttle control is control of the throttle valve 22 that is implemented in normal operation that is not the fuel cut. The non-FC-time fuel injection control is control of the injector 11 that is implemented in normal operation that is not the fuel cut. The non-FC-time throttle control and the non-FC-time fuel injection control will be described below.

If the determination in step S62 is YES and fuel cut is in progress, the PCM 100 may determine whether the catalyst protection flag is 1 (step S63). Step S63 implements a determination using a catalyst protection flag calculated separately based on the catalyst temperature as described above.

If the determination in step S63 is NO and the catalyst protection flag is 0, the PCM 100 may proceed to step S66. In step S66, the PCM 100 may set the target throttle opening degree that is the target value of the throttle opening degree to the normal FC opening degree. As described above, the normal FC opening degree may be preset to an opening degree close to full closure. After step S66, the PCM 100 may proceed to step S67.

If the determination in step S63 is YES and the catalyst protection flag is 1, the PCM 100 may determine whether the inflow of exhaust gas containing the correction fuel into the catalyst device 31 has ended (step S64). Details of step S64 will be described below.

If the determination in step S64 is NO and the inflow of exhaust gas containing the correction fuel into the catalyst device 31 has not yet ended, the PCM 100 may proceed to step S66, set the target throttle opening degree to the normal FC opening degree, and then proceed to step S67.

Contrarily, if the determination in step S64 is YES and the inflow of exhaust gas containing the correction fuel into the catalyst device 31 has ended, the PCM 100 may proceed to step S65, and implements intake air amount increase control that is one of catalyst protection controls.

The intake air amount increase control is a control that increases the intake air amount that is the amount of air drawn into the combustion chamber 5. In step S65, the PCM 100 may set the target throttle opening degree to an opening degree larger (more open) than the normal FC opening degree.

In steps S69 and S71 described below, the throttle valve 22 is opened and/or closed so as to achieve the target throttle opening degree. Therefore, when the intake air volume increase control is implemented, the intake air amount is increased compared to when the intake air amount increase control is not implemented (when step S66 is implemented). After step S65, the PCM 100 proceeds to step S67.

In step S67, the throttle valve 22 may be opened and/or closed so that the opening degree of the throttle valve 22 becomes the target throttle opening degree set in step S65 or step S66. For example, the PCM 100 obtains the current opening degree of the throttle valve 22 based on the drive current of the throttle valve 22 and the output of a throttle valve opening degree sensor capable of detecting the opening degree of the throttle valve 22, and drives the throttle valve 22 based on the current opening degree of the throttle valve 22 and a target throttle opening degree. After step S67, the PCM 100 ends the process (returns to step S61).

As described above, during the fuel cut (determination in step S62 is YES), for example, when the catalyst protection flag is 1 (determination in step S63 is YES) and the inflow of exhaust gas containing the correction fuel into the catalyst device 31 has ended (determination in step S64 is YES), the intake air amount increase control is implemented and the throttle opening degree is set to a larger opening degree than the normal FC opening degree, that is, the opening degree when the catalyst protection flag is 0. As a result, the intake air amount is increased more than when the catalyst protection flag is 0 (the determination in step S63 is NO). If the catalyst protection flag is 1 during fuel cut (determination in step S63 is YES), but if the inflow of exhaust gas containing the correction fuel into the catalyst device 31 has not ended (determination in step S64 is NO), the intake air amount increase control is prohibited and the throttle opening degree is controlled to the normal FC opening degree.

### (Non-FC-time throttle control)

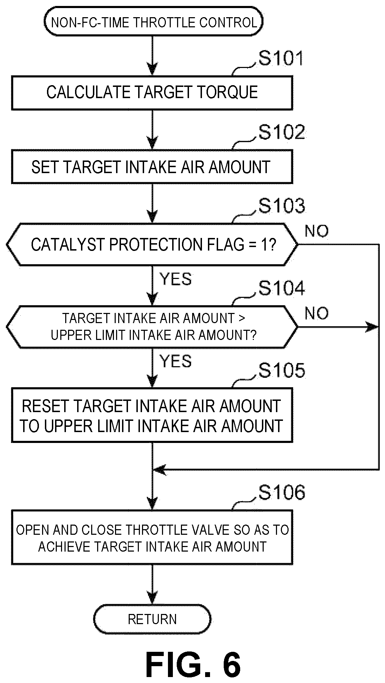

Next, the non-FC-time throttle control of step S100 will be described using the flowchart in FIG. 6.

When non-FC-time throttle control is started, the PCM 100 may first calculate a target torque that is a target value for the engine torque (step S101). For example, the PCM 100 calculates the target torque based on the accelerator opening degree detected by the accelerator sensor SN7 and the vehicle speed detected by the vehicle speed sensor SN9, and the like.

Next, the PCM 100 may set a target intake air amount that is a target value of the intake air amount (step S102). For example, PCM 100 sets the target intake air amount based on the target torque and the engine rotation speed detected by crank angle sensor SN1, and the like.

Next, the PCM 100 may determine whether the catalyst protection flag is 1 (step S103). If the determination in step S103 is YES and the catalyst protection flag is 1, the PCM 100 may determine whether the target intake air amount set in step S102 is larger than the upper limit intake air amount (step S104). The upper limit intake air amount may be preset and stored in the PCM 100.

If the determination in step S104 is YES and the target intake air amount is larger than the upper limit intake air amount, the PCM 100 may reset the target intake air amount to the upper limit intake air amount (step S105). In other words, the target intake air amount is changed from the value set in step S102 to the upper limit intake air amount. After step S105, the PCM 100 proceeds to step S106.

Contrarily, if the determination in step S103 is NO and the catalyst protection flag is 0, or if the target intake air amount set in step S102 is equal to or smaller than the upper limit intake air amount, the PCM 100 may proceed to step S106 without implementing step S105, that is, while maintaining the target intake air amount at the value set in step S102.

In step S106, the PCM 100 opens and/or closes the throttle valve 22 so as to achieve the target intake air amount set in step S102, or the target intake air amount reset to the upper limit intake air amount in step S105. With the implementation of step S106, the non-FC-time throttle control ends.

As described above, when fuel cut is not being implemented and the catalyst protection flag is 1, the PCM 100 implements control to restrict the target intake air amount, and therefore the intake air amount, to below the upper limit intake air amount, as a part of the catalyst protection control.

### (Non-FC-time fuel injection control)

Next, the non-FC-time fuel injection control of step S200 will be described. In the following, the end of the fuel cut and the resumption of fuel supply to the combustion chamber 5 may be referred to as fuel recovery, as appropriate.

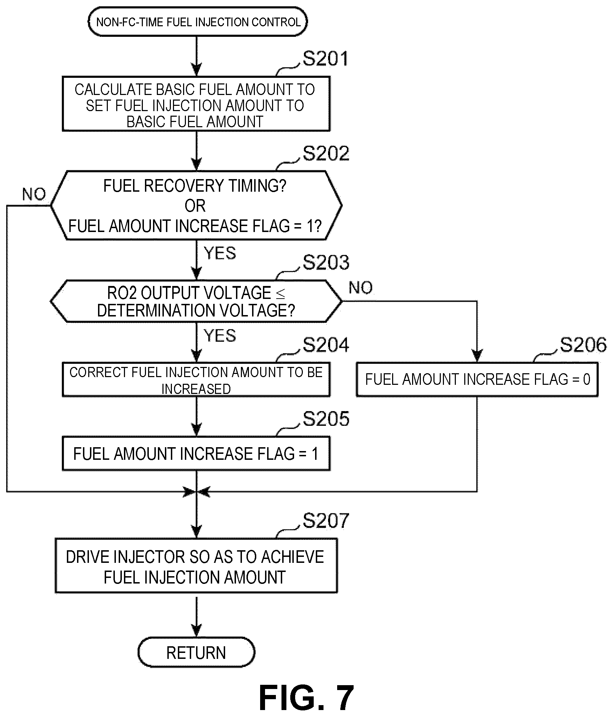

In the fuel cut, fuel supply to the combustion chamber 5 stops, and thereby the exhaust gas becomes almost air. As a result, oxygen is absorbed in the catalyst device 31 during the fuel cut. If the amount of oxygen absorbed in the catalyst device 31 increases, the air-fuel ratio in the catalyst device 31 after fuel recovery becomes leaner than the stoichiometric air-fuel ratio, and thereby the NOx purification performance decreases. Therefore, in this embodiment, a fuel amount increase control is implemented to increase the fuel amount to be supplied to the combustion chamber 5 after the fuel recovery, to supply unburned fuel to the exhaust passage 30 and the catalyst device 31, so that the oxygen absorbed in the catalyst device 31 is consumed by reaction with the unburned fuel. The non-FC-time fuel injection control, including this fuel amount increase control, will be described using the flowchart in FIG. 7.

When non-FC-time fuel injection control is started, the PCM 100 may first calculate the basic fuel amount that is the basic amount of fuel to be supplied to the combustion chamber 5, and may set this as the fuel injection amount (step S201). PCM 100 may calculate a basic fuel amount that is the amount of fuel that brings the air-fuel ratio of the air-fuel mixture in the combustion chamber 5 close to a value of the stoichiometric air-fuel ratio, based on the target intake air amount set in step S102 or step S105 of non-FC-time fuel throttle control and/or the engine rotation speed detected by crank angle sensor SN1. Here, as described above, the target intake air amount may be set based on the target torque and/or therefore the accelerator opening degree, and the basic fuel amount may be set based on the accelerator opening degree.

Then, the PCM 100 may determine whether the following condition is met: it is the time for the fuel recovery (immediately after the fuel cut ends and fuel supply is resumed); or the fuel amount increase flag described below is 1 (S202). If the determination in step S202 is YES and it is time for the fuel recovery, or if the fuel amount increase flag is 1, the PCM 100 may determine whether the RO2 output voltage, which is the output voltage of the rear O2 sensor SN6, is equal to or lower than a predetermined determination voltage (step S203).

The determination voltage may be preset and stored in the PCM 100. For example, the determination voltage is preset to a value higher than the above-described first voltage and lower than the stoichiometric voltage, and is stored in the PCM 100.

The RO2 output voltage is equal to or lower than the determination voltage when the rear air-fuel ratio is leaner than the stoichiometric air-fuel ratio, or when the rear air-fuel ratio is in the process of transitioning from a state leaner than the stoichiometric air-fuel ratio to the stoichiometric air-fuel ratio. In other words, the RO2 output voltage is equal to or lower than the determination voltage when the rear air-fuel ratio is substantially leaner than the stoichiometric air-fuel ratio, and in step S203, it is determined whether the rear air-fuel ratio is leaner than the stoichiometric air-fuel ratio. Furthermore, as described above, the rear air-fuel ratio detected by the rear O2 sensor SN6 is equal to the air-fuel ratio in the catalyst device 31. Thus, in step S203, it is determined whether the air-fuel ratio in the catalyst device 31 is substantially leaner than the stoichiometric air-fuel ratio (whether it is higher than the stoichiometric air-fuel ratio).

If the determination in step S203 is YES and the RO2 output voltage is equal to or lower than the determination voltage, that is, the rear air-fuel ratio and the air-fuel ratio in the catalyst device 31 are leaner than the stoichiometric air-fuel ratio (higher than the stoichiometric air-fuel ratio), the PCM 100 implements the fuel amount increase control that corrects the fuel injection amount to be increased (step S204).

For example, in step S204, the PCM 100 may reset the fuel injection amount to a value larger than the basic injection amount calculated in step S201. Particularly, PCM 100 may reset the fuel injection amount to a value obtained by adding a preset amount to the fuel injection amount set in step S201.

As described above, the fuel injection amount set in step S201 is an amount that brings the air-fuel ratio of the air-fuel mixture in the combustion chamber 5 close to the stoichiometric air-fuel ratio. Therefore, when the fuel injection amount is corrected to be increased, the air-fuel ratio of the air-fuel mixture in the combustion chamber 5 becomes richer than the stoichiometric air-fuel ratio. After step S204, the PCM 100 may set the fuel amount increase flag to 1 (step S205).

Contrarily, if the determination in step S202 is NO, and it is not time for the fuel recovery or the fuel amount increase flag is 0, the PCM 100 may proceed to step S207 without implementing steps S204 and S205. In other words, if the determination in step S202 is NO, the PCM 100 may not correct the fuel injection amount to be increased, and may proceed to step S207 while maintaining the fuel injection amount at the value set in step S201.

Particularly, if the determination in step S202 is YES while the determination in step S203 is NO and the RO2 output voltage is higher than the determination voltage, that is, if the rear air-fuel ratio and the air-fuel ratio in the catalyst device 31 are the stoichiometric air-fuel ratio or richer than the stoichiometric air-fuel ratio (the rear air-fuel ratio and the air-fuel ratio in the catalyst device 31 are equal to or lower than the stoichiometric air-fuel ratio), the PCM 100 may set the fuel amount increase flag to 0 (step S206) and proceeds to step S207. In this case, the PCM 100 may also proceed to step S207 without implementing step S204, that is, without correcting the fuel injection amount to be increased.

In step S207, the PCM 100 may drive the injector 11 so as to achieve the fuel injection amount set in step S201 or the fuel injection amount reset in step S204. The non-FC-time fuel injection control ends with the implementation of step S207.

As described above, for example, after the fuel recovery is performed until the RO2 output voltage becomes equal to or lower than the determination voltage and the rear air-fuel ratio and the air-fuel ratio in the catalyst device 31 become the stoichiometric air-fuel ratio or richer than this (becomes equal to or lower than the stoichiometric air-fuel ratio), the PCM 100 implements fuel increase control that increases the fuel injection amount over the basic injection amount to make the air-fuel mixture in the combustion chamber 5 richer than the stoichiometric air-fuel ratio, and sets the fuel amount increase flag to 1 for the period in which fuel increase control is implemented. In this way, the fuel amount increase flag is set to 1 while the fuel increase control is implemented and is set to 0 otherwise. Note that the fuel amount increase flag is set to 0 when the fuel cut starts while it is 1.

Returning to the flowchart of FIG. 5, the details of step S64 will be described. Step S64 determines whether all of the exhaust gas, which is the air-fuel mixture (burned gas after combustion of the air-fuel mixture) formed in the combustion chamber 5 when the fuel increase control is implemented and which contains the fuel increased by correction, has reached the catalyst device 31. For example, it takes time for the burned gas to reach the catalyst device 31 after being led out of the combustion chamber 5. As a result, after fuel increase control ends, exhaust gas containing the fuel increased by correction continues to flow into the catalyst device 31 for a while. Step S64 determines whether the inflow of exhaust gas, containing the fuel increased by correction, into the catalyst device 31 has ended.

As described above, when the fuel injection amount is corrected to be increased, the air-fuel ratio of the air-fuel mixture in the combustion chamber 5 becomes richer than the stoichiometric air-fuel ratio. Therefore, while exhaust gas containing the fuel increased by correction is flowing into the catalyst device 31, the air-fuel ratio of the exhaust gas flowing into the catalyst device 31 is richer than the stoichiometric air-fuel ratio.

In contrast, after the fuel increase control ends, the fuel injection amount is changed to the basic fuel amount, and the air-fuel ratio of the air-fuel mixture in the combustion chamber 5 and exhaust gas becomes the stoichiometric air-fuel ratio. Therefore, when the inflow of the exhaust gas, containing the fuel increased by correction, into the catalyst device 31 ends, the air-fuel ratio of the exhaust gas flowing into the catalyst device 31 becomes the stoichiometric air-fuel ratio.

Furthermore, if the fuel cut is implemented during fuel increase control, the air-fuel ratio of the air-fuel mixture in the combustion chamber 5 and exhaust gas becomes leaner than the stoichiometric air-fuel ratio when fuel increase control ends. Therefore, when the exhaust gas containing the fuel increased by correction stops flowing into the catalyst device 31, the air-fuel ratio of the exhaust gas flowing into the catalyst device 31 becomes leaner than the stoichiometric air-fuel ratio.

For this reason, in this embodiment, when the air-fuel ratio of the exhaust gas flowing into the catalyst device 31 changes from a state richer than the stoichiometric air-fuel ratio to the stoichiometric air-fuel ratio or leaner than this, it is determined that the inflow of the exhaust gas, containing the fuel increased by correction, into the catalyst device 31 has ended.

Here, as described above, the front air-fuel ratio detected by the front O2 sensor SN5 is equal to the air-fuel ratio of the exhaust gas flowing into the catalyst device 31. Therefore, in step S64, the PCM 100 determines step S64 as NO after the fuel amount increase control ends and the fuel amount increase flag changes from 1 to 0 until the front air-fuel ratio detected by the front O2 sensor SN5 becomes the stoichiometric air-fuel ratio or leaner than this (until it becomes equal to or higher than the stoichiometric air-fuel ratio), and determines step S64 as YES otherwise.

As described above for the flowchart in FIG. 5, when the determination in step S64 is NO and the inflow of the exhaust gas, containing the fuel increased by correction after the fuel amount increase control ends, into the catalyst device 31 has not ended, the PCM 100 prohibits the intake air amount increase control and sets the target throttle opening degree to the normal FC opening degree (step S66). Contrarily, when the determination in step S64 is YES and the inflow of exhaust gas, containing the fuel increased by correction, into the catalyst device 31 has ended, the PCM 100 proceeds to step S65 and implements the intake air amount increase control.

### (Actions, and the like)

As described above, for example, in the above embodiment, when the catalyst protection flag is 1 and the catalyst temperature is high (basically when the inflow of exhaust gas, containing the fuel increased by correction, into the catalyst device 31 has ended), the intake air amount increase control is implemented, and the throttle opening degree and the intake amount at the time of fuel cut are made larger than when the catalyst protection flag is 0 and the catalyst temperature is low. Therefore, by using the timing of the fuel cut, the catalyst device 31, which is at a high temperature, can be cooled by a large amount of air, and the temperature of the catalyst device 31 can be decreased early.

As described above, the time when the catalyst flag is 1 and the catalyst temperature is high means the time when the catalyst temperature is equal to or higher than the first determination temperature, or that the catalyst temperature has once reached or exceeded the first determination temperature but has not yet dropped below the second determination temperature. The time when the catalyst protection flag is 0 and the catalyst temperature is low means the time when the catalyst temperature is below the second determination temperature, or that the catalyst temperature has been equal to or higher than the second determination temperature but has not been reached the first determination temperature.

Moreover, when the fuel cut is ended and fuel supply is resumed, the fuel amount increase control is implemented to increase the amount of fuel to be supplied to the combustion chamber 5 over the basic fuel amount. This makes it possible to use the oxygen absorbed in the catalyst device 31 during the fuel cut to oxidize the fuel, and consume the oxygen early. This makes it possible to improve the NOx purification performance of the catalyst device 31 after the fuel cut ends.

However, if the intake air amount increase control is implemented and the throttle opening degree is increased in a state in which the inflow of exhaust gas, containing the fuel increased by correction, into the catalyst device 31 has not ended, the unburned fuel may react with air in the exhaust passage 30 and the catalyst device 31, causing the temperature of the catalyst device 31 to rise instead. In contrast, in the above embodiment, if the inflow of exhaust gas, containing the fuel increased by correction, into the catalyst device 31 has not ended, the intake air amount increase control is prohibited. This makes it possible to prevent the above-described reaction from occurring in the exhaust passage 30 and the catalyst device 31, and prevent the rise in temperature of the catalyst device 31. According to the above embodiment, the NOx purification performance of the catalyst device 31 can therefore be improved while reliably preventing the excessive temperature rise of the catalyst device 31.

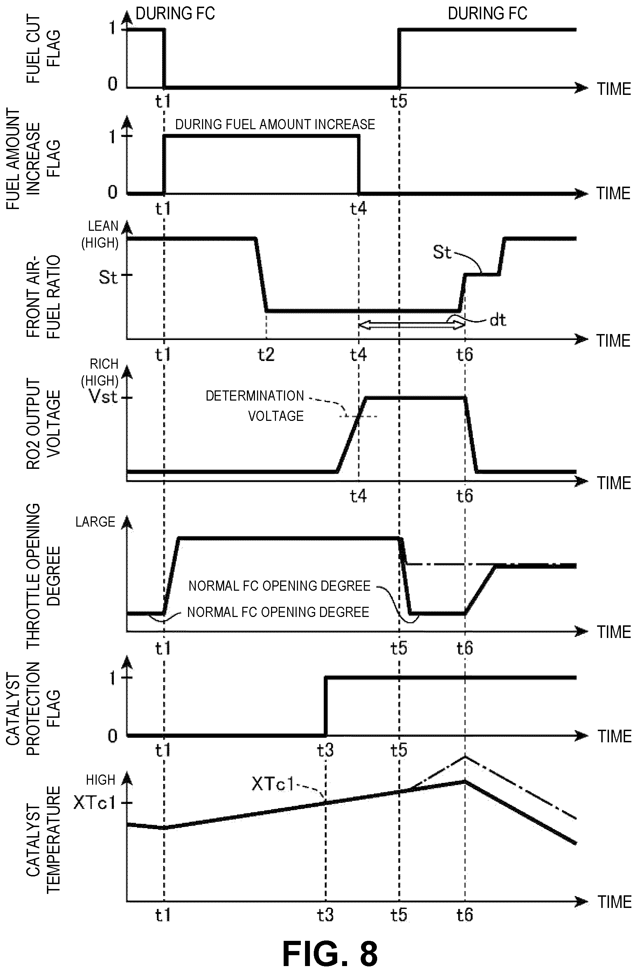

A specific description will be made using FIG. 8. FIG. 8 is a time chart schematically showing the time change of each parameter during driving of the engine. FIG. 8 shows, from top to bottom, charts of the fuel cut flag, the fuel amount increase flag, the front air-fuel ratio detected by the front O2 sensor SN5, the RO2 output voltage, the throttle opening degree, the catalyst protection flag, and the catalyst temperature.

The fuel cut flag is a flag that is set to 1 when the fuel cut is implemented and set to 0 otherwise. In the charts of the throttle opening degree and catalyst temperature, the chain line indicates the throttle opening degree and catalyst temperature according to the comparative example, and when the catalyst protection flag is 1 during the fuel cut, the parameters shown are those obtained on the assumption that the intake air amount increase control is implemented regardless of whether the inflow of exhaust gas, containing the fuel increased by correction, into the catalyst device 31 has ended. Note that in FIG. 8, "during FC" in the fuel cut flag chart indicates that the fuel cut is in progress, and "during fuel amount increase" in the fuel amount increase flag chart indicates that fuel increase control is implemented.

In the example of FIG. 8, with the catalyst protection flag at 0, the fuel cut is implemented until time t1, and the fuel recovery is performed at time t1. Since fuel cut is implemented with the catalyst protection flag set to 0, the throttle opening degree is controlled to the normal FC opening degree until time t1. In the example of FIG. 8, the fuel cut is implemented until time t1, so that the front air-fuel ratio is leaner than the stoichiometric air-fuel ratio (St), and the RO2 output voltage is lower (on the lean side) than the stoichiometric voltage (Vst).

When the fuel recovery is performed at time t1, the fuel increase control is implemented and the fuel amount increase flag becomes 1. Since the fuel recovery is performed, the throttle opening degree is controlled to an opening degree corresponding to the target intake air amount. In the example of FIG. 8, the throttle opening degree is set to a larger opening degree than the normal FC opening degree after time t1. In addition, after time t1, fuel amount increase control is implemented, so that the air-fuel ratio of the air-fuel mixture in the combustion chamber 5 becomes richer than the stoichiometric air-fuel ratio.

However, as described above, there is a delay time until the burned gas in the combustion chamber 5 reaches the catalyst device 31 and the front O2 sensor SN5. As a result, the front air-fuel ratio is maintained leaner than the stoichiometric air-fuel ratio for a while after time t1. Similarly, the rear air-fuel ratio also is leaner than the stoichiometric air-fuel ratio for a while after time t1, and the RO2 output voltage is maintained at a value smaller than the stoichiometric voltage (Vst).

In the example of FIG. 8, exhaust gas containing the fuel increased by correction reaches the catalyst device 31 and the front O2 sensor SN5 at time t2, and the front air-fuel ratio becomes richer than the stoichiometric air-fuel ratio at time t2. However, because fuel cut has been implemented until time t1, oxygen is absorbed in the catalyst device 31 at time t2. Therefore, although exhaust gas richer than the stoichiometric air-fuel ratio flows into the catalyst device 31 at time t2, the air-fuel ratio in the catalyst device 31 is maintained leaner than the stoichiometric air-fuel ratio for a while after time t2, and the RO2 output voltage is maintained at a value smaller than the stoichiometric voltage (Vst).

In the example of FIG. 8, after a while from time t2, the excess oxygen absorbed in the catalyst device 31 is almost all consumed, the air-fuel ratio in the catalyst device 31 and the rear air-fuel ratio become the stoichiometric air-fuel ratio, and at time t4, the RO2 output voltage becomes equal to or higher than the determination voltage. When the RO2 output voltage becomes equal to or higher than the determination voltage, the fuel amount increase control is ended and the fuel amount increase flag becomes 0.

When the fuel amount increase control ends, the fuel injection amount is set to the basic injection amount, and the air-fuel ratio of the air-fuel mixture in the combustion chamber 5 becomes the stoichiometric air-fuel ratio. However, due to the delay time dt of the exhaust gas, the exhaust gas containing the fuel increased by correction flows into the front O2 sensor SN5 and the catalyst device 31 for a while after time t4, and the front air-fuel ratio is maintained richer than the stoichiometric air-fuel ratio. In the example of FIG. 8, the inflow of exhaust gas, containing the fuel increased by correction, into the catalyst device 31 ends at time t6, and the front air-fuel ratio increases to the stoichiometric air-fuel ratio (St) at time t6.

In the example of FIG. 8, the catalyst temperature becomes equal to or higher than the first determination temperature (Xtc1) at time t3 between time t2 and t4, and the catalyst protection flag switches from 0 to 1. In the example of FIG. 8, while the catalyst protection flag is 1, the fuel cut is started again at time t5 between time t4 and time t6, and the fuel cut flag becomes 1.

In the above embodiment, when the catalyst protection flag is 1 during the fuel cut and the inflow of exhaust gas, containing the fuel increased by correction, into the catalyst device 31 has ended, the intake air amount increase control is implemented, and in other cases, the intake air amount increase control is prohibited. At time t5 in the example of FIG. 8, the conditions that the fuel cut is in progress and the catalyst protection flag is 1 are met, while the inflow of exhaust gas, containing the fuel increased by correction, into the catalyst device 31 has not ended. Therefore, in the above embodiment, the implementation of intake air amount increase control at time t5 is prohibited, and when fuel cut starts at time t5, the throttle opening degree is controlled to the normal FC opening degree.

In the example of FIG. 8, the inflow of exhaust gas, containing the fuel increased by correction, into the catalyst device 31 ends at time t6 after time t5. Therefore, in the above embodiment, the throttle opening degree is maintained at the normal FC opening degree between time t5 and time t6. Then, at time t6, the intake air amount increase control is started, and the throttle valve 22 is controlled to the opening side to be changed to an opening degree larger than the normal FC opening degree.

In contrast, in the comparative example, the intake air amount increase control is configured to be implemented regardless of whether the inflow of the exhaust gas, containing the fuel increased by correction, into the catalyst device 31 has ended, and the intake air amount increase control is started at time t5 to control the throttle valve 22 to the open side. As described above, if fuel cut starts at time t5, the inflow of exhaust gas, containing the fuel increased by correction, into the catalyst device 31 does not end until time t6, and the unburned fuel is present in the exhaust passage 30 upstream of the catalyst device 31 and catalyst device 31 between time t5 and time t6. Therefore, in the comparative example, the throttle valve 22 is controlled to open side between time t5 and time t6, and a large amount of air is introduced into the combustion chamber 5 and the exhaust passage 30, thereby causing the unburned fuel to react with the air in the exhaust passage 30 and the catalyst device 31. As a result, as shown by the chain line in the catalyst temperature chart in FIG. 8, in the comparative example, the catalyst device receives the heat generated by the above reaction, so that the temperature of the catalyst device rises after time t5.

In contrast, in the above embodiment, the intake air amount increase control is prohibited and the throttle opening degree is controlled to the normal FC opening degree between time t5 and time t6, and the amount of air introduced into the combustion chamber 5 and therefore the exhaust passage 30 is kept small. According to the above embodiment, the reaction between unburned fuel and air in the exhaust passage 30 is prevented, so that the increase in the catalyst temperature after time t5 is prevented, as shown by the solid line in the catalyst temperature chart of FIG. 8.

Note that in the example of FIG. 8, increase correction of the fuel injection amount ends at time t4, the air-fuel mixture in the combustion chamber 5 is controlled to the stoichiometric air-fuel ratio for a while, and then fuel cut is started (at time t5), so that the front air-fuel ratio is close to the stoichiometric air-fuel ratio for a while after time t6, and then becomes leaner than the stoichiometric air-fuel ratio. Also, after time t6, in both the above embodiment and the comparative example, since the intake air amount increase control is implemented in a state in which the inflow of exhaust gas, containing the fuel increased by correction, into the catalyst device 31 has ended, the catalyst temperature drops.

In the above embodiment, the front air-fuel ratio detected by the front O2 sensor SN5 may be used to determine that the inflow of exhaust gas, containing the fuel increased by correction, into the catalyst device 31 has ended. Therefore, according to the above embodiment, it is possible to accurately estimate the timing at which the inflow of exhaust gas, containing the fuel increased by correction, into the catalyst device 31 ends, and it is possible to prevent the intake air amount increase control from having an excessively long prohibition period. Therefore, according to the above embodiment, it is possible to secure the period in which the intake air amount increase control is implemented, and cool the catalyst device more reliably.

In addition, in the above embodiment, the fuel amount increase control may be configured to end when the RO2 output voltage exceeds the determination voltage. In other words, the detection value of the rear O2 sensor SN6 is used to determine that the air-fuel ratio in the catalyst device 31 has become the stoichiometric air-fuel ratio or richer than this, that is, the state, in which the air-fuel ratio in the catalyst device 31 is leaner than the stoichiometric air-fuel ratio, has been terminated. For this reason, according to the above embodiment, the timing at which the lean state of the catalyst device 31 is terminated can be obtained accurately, and the implementation period of the fuel amount increase control can be made appropriate.

For example, it is possible to prevent the implementation period of the fuel amount increase control from being excessively longer or excessively shorter than the period required to consume the oxygen absorbed in the catalyst device 31. Since the implementation period of the fuel amount increase control is prevented from being excessively long, it is possible to prevent delay in the timing at which the inflow of the exhaust gas, containing the fuel increased by correction, into the catalyst device 31 ends, and therefore to prevent lengthening of the prohibition period of the intake air amount increase control. This makes it possible to secure opportunities for the intake air amount increase control to cool the catalyst device 31 more reliably. This then makes it possible to prevent discharge of a large amount of the unburned fuel. In addition, since the implementation period of the fuel amount increase control is prevented from being excessively short, the oxygen absorbed in the catalyst device 31 can be appropriately consumed, and the NOx purification performance of the catalyst device 31 can be secured.

Particularly, in the above embodiment, when the catalyst protection flag is 1 and the catalyst temperature is high, the intake air amount may be prevented from exceeding the upper limit intake air amount while fuel cut is not being implemented, allowing the combustion energy generated in the combustion chamber to be kept small. This makes it possible to more reliably prevent the catalyst temperature from becoming excessively high.

However, if opportunities to restrict the intake air amount increases, opportunities to restrict engine output increases, which may deteriorate driving performance of the vehicle. For this, in the above embodiment, the catalyst device 31 is cooled when the fuel cut is implemented to prevent its excessive temperature rise. This makes it possible to reduce the opportunities for the catalyst temperature to become high when the fuel cut is not implemented, and prevent deterioration of driving performance.

### (Modified example)

In the above embodiment, the timing, at which the front air-fuel ratio becomes the stoichiometric air-fuel ratio or leaner than this after the fuel amount increase control ends, is obtained as the timing in which the inflow of the exhaust gas, containing the fuel increased by correction, into the catalyst device 31 ends (hereinafter referred to as the inflow end timing, as appropriate), but the configuration for obtaining the inflow end timing is not limited to this.

For example, instead of the above configuration, the timing, at which the volume of the exhaust gas led out to the exhaust passage 30 after the fuel amount increase control ends becomes equal to or larger than the volume of the exhaust passage 30 between the engine body 1 and the catalyst device 31, may be obtained as the inflow end timing. In other words, when the fuel cut is in progress and the catalyst flag is 1, the intake air amount increase control may be configured to be prohibited after the fuel amount increase control ends until the volume of the exhaust gas, led out to the exhaust passage 30 after the end of the fuel amount increase control, becomes equal to or larger than the volume of the exhaust passage 30 between the engine body 1 and the catalyst device 31.

Note that the volume of exhaust gas led out to the exhaust passage 30 after the fuel amount increase control ends can be obtained by estimating the volumetric flow rate of exhaust gas led out of the combustion chamber 5 to the exhaust passage 30 based on the engine rotation speed and the intake air amount, and integrating the estimated volumetric flow rate after the fuel amount increase control ends. The volume of the exhaust passage 30 between the engine body 1 and the catalyst device 31 just needs to be set in advance by measurement or the like.

The inflow end timing may also be a timing at which a preset set period has elapsed after the fuel increase control ends. In this case, the set period may further be determined by the engine rotation speed or the like.

Also, the above embodiment is described with the case in which increasing and decreasing the opening degree of the throttle valve 22 increases and decreases the intake air amount when the intake air amount increase control is implemented and when the control for restricting the intake air amount to an upper limit intake air amount is implemented, but the device for increasing and decreasing the intake air amount is not limited to the throttle valve 22. For example, a variable valve mechanism capable of changing the opening and closing timings of the intake valve 8 may be provided in the device that drives the intake valve 8 to increase and decrease the intake air amount by changing the opening and closing timings of the intake valve 8.

The above embodiment is described with the case in which the catalyst protection control (intake air amount increase control and control to restrict he intake air amount to an upper limit intake air amount) is implemented when the catalyst temperature is equal to or higher than the first determination temperature, and when the catalyst temperature has reached or exceeded the first determination temperature but has not yet dropped to the second determination temperature or lower, but the condition that the catalyst temperature has reached or exceeded the first determination temperature but has not yet dropped to the second determination temperature or lower may be excluded from the conditions for implementing the catalyst protection control.

In addition, the specific structure of the engine body 1, such as the number of cylinders, is not limited to the above.

### [Reference Signs List]

1 engine body
11 injector (fuel supply device)
20 intake passage
22 throttle valve (intake air amount adjustment device)
30 exhaust passage
31 catalyst device
91 accelerator pedal
100 PCM (control unit, catalyst temperature obtaining device)
SN5 front O2 sensor (upstream air-fuel ratio detection device)
SN6 rear O2 sensor (downstream air-fuel ratio detection device)
SN7 accelerator sensor (accelerator opening degree detection device)

## Claims

1. An engine system (E) provided in a vehicle including an accelerator pedal (91), the engine system (E) comprising:
an engine body (1) including a combustion chamber (5);
an exhaust passage (30) and an intake passage (20) each connected to the engine body (1);
a fuel supply device (11) that is configured to supply fuel to the combustion chamber (5);
an intake air amount adjustment device (22) that is configured to adjust an intake air amount that is an amount of air drawn into the combustion chamber (5);
a catalyst device (31) including a three-way catalyst;
a catalyst temperature obtaining device that is configured to obtain a catalyst temperature, the catalyst temperature being a temperature of the catalyst device (31);
an accelerator opening degree detection device (SN7) that is configured to detect an accelerator opening degree, the accelerator opening degree being an opening degree of the accelerator pedal (91); and
a control unit (100) that is configured to calculate a basic fuel amount based on the accelerator opening degree detected by the accelerator opening degree detection device (SN7) to control the fuel supply device (11) so that a fuel amount to be supplied to the combustion chamber (5) equals the basic fuel amount,
wherein
when the accelerator opening degree detected by the accelerator opening degree detection device (SN7) is lower than a predetermined accelerator determination opening degree, the control unit (100) is configured to implement a fuel cut to stop fuel supply by the fuel supply device (11),
when the control unit (100) implements the fuel cut, the control unit (100) is configured to implement an intake air amount increase control to control the intake air amount adjustment device (22) so that the intake air amount is increased when the catalyst temperature obtained by the catalyst temperature obtaining device is equal to or higher than a determination temperature,
when the control unit (100) ends the fuel cut and resumes fuel supply by the fuel supply device (11), the control unit (100) is configured to implement a fuel amount increase control to control the fuel supply device (11) so that the fuel amount to be supplied to the combustion chamber (5) is larger than the basic fuel amount, and
the control unit (100) is configured to prohibit the intake air amount increase control for a predetermined period after the control unit (100) ends the fuel amount increase control.

2. The engine system (E) according to claim 1, wherein
the control unit (100) is configured to implement the intake air amount increase control to control the intake air amount adjustment device (22) so that an intake air amount when the catalyst temperature is equal to or higher than the determination temperature is larger than an intake air amount when the catalyst temperature is lower than the determination temperature.

3. The engine system (E) according to claim 1 or 2, further comprising an upstream air-fuel ratio detection device (SN5) that is configured to detect an air-fuel ratio of exhaust gas flowing into the catalyst device (31),
wherein the control unit (100) is configured to prohibit the intake air amount increase control after the fuel amount increase control ends until an air-fuel ratio of the exhaust gas detected by the upstream air-fuel ratio detection device (SN5) becomes equal to or higher than a stoichiometric air-fuel ratio.

4. The engine system (E) according to any one of the preceding claims, wherein
the control unit (100) is configured to prohibit the intake air amount increase control after the fuel amount increase control ends until a volume of exhaust gas led out to the exhaust passage (30) after the fuel amount increase control ends becomes equal to or larger than a volume of the exhaust passage (30) between the engine body (1) and the catalyst device (31).

5. The engine system (E) according to any one of the preceding claims further comprising a downstream air-fuel ratio detection device (SN6) that is configured to detect an air-fuel ratio of exhaust gas flowing out of the catalyst device (31),
wherein the control unit (100) is configured to implement the fuel amount increasing control for a period after fuel supply by the fuel supply device (11) is resumed until an air-fuel ratio of the exhaust gas detected by the downstream air-fuel ratio detection device becomes equal to or lower than a stoichiometric air-fuel ratio.

6. The engine system (E) according to any one of the preceding claims, wherein
the control unit (100) is configured to restrict the intake air amount to a predetermined upper limit intake air amount or less by the intake air amount adjustment device (22) when the fuel cut is not implemented and the catalyst temperature is higher than the determination temperature.

7. The engine system (E) according to any one of the preceding claims, wherein
the intake air amount adjustment device (22) is a throttle valve that is provided in the intake passage (20), and configured to open and/or close the intake passage (20).

8. A vehicle comprising:
an accelerator pedal (91); and
the engine system (E) according to any one of the preceding claims.

9. A control method of an engine system (E) provided in a vehicle including an accelerator pedal (91), the engine system (E) comprising an engine body (1) including a combustion chamber (5), an exhaust passage (30) and an intake passage (20) each connected to the engine body (1), a fuel supply device (11) that is configured to supply fuel to the combustion chamber (5), an intake air amount adjustment device (22) that is configured to adjust an intake air amount that is an amount of air drawn into the combustion chamber (5), and a catalyst device (31) including a three-way catalyst, the control method comprising:
obtaining a catalyst temperature, the catalyst temperature being a temperature of the catalyst device (31);
detecting an accelerator opening degree, the accelerator opening degree being an opening degree of the accelerator pedal (91);
calculating a basic fuel amount based on the accelerator opening degree detected by the accelerator opening degree detection device (SN7) to control the fuel supply device (11) so that a fuel amount to be supplied to the combustion chamber (5) equals the basic fuel amount;
when the accelerator opening degree is lower than a predetermined accelerator determination opening degree, implementing a fuel cut to stop fuel supply by the fuel supply device (11);
when the fuel cut is implemented, implementing an intake air amount increase control to control the intake air amount adjustment device (22) so that the intake air amount is increased when the catalyst temperature is equal to or higher than a determination temperature;
when the fuel cut is ended and fuel supply by the fuel supply device (11) is resumed, implementing a fuel amount increase control to control the fuel supply device (11) so that the fuel amount to be supplied to the combustion chamber (5) is larger than the basic fuel amount; and
prohibiting the intake air amount increase control for a predetermined period after the fuel amount increase control is ended.

10. The control method according to claim 9, wherein
the intake air amount increase control is implemented to control the intake air amount adjustment device (22) so that an intake air amount when the catalyst temperature is equal to or higher than the determination temperature is larger than an intake air amount when the catalyst temperature is lower than the determination temperature.

11. The control method according to claim 9 or 10, further comprising detecting an air-fuel ratio of exhaust gas flowing into the catalyst device (31),
wherein the intake air amount increase control is prohibited after the fuel amount increase control ends until an air-fuel ratio of the exhaust gas flowing into the catalyst device (31) becomes equal to or higher than a stoichiometric air-fuel ratio.

12. The control method according to any one of claims 9 to 11, wherein
the intake air amount increase control is prohibited after the fuel amount increase control ends until a volume of exhaust gas led out to the exhaust passage (30) after the fuel amount increase control ends becomes equal to or larger than a volume of the exhaust passage (30) between the engine body (1) and the catalyst device (31).

13. The control method according to any one of claims 9 to 12, further comprising detecting an air-fuel ratio of exhaust gas flowing out of the catalyst device (31),
wherein the fuel amount increasing control is implemented for a period after fuel supply by the fuel supply device (11) is resumed until an air-fuel ratio of the exhaust gas flowing out of the catalyst device (31) becomes equal to or lower than a stoichiometric air-fuel ratio.

14. A control unit (100) configured to perform the method of any one of claims 9 to 13.

15. A computer program product configured to perform the method of any one of claims 9 to 13 when executed by a control unit (100).
